# EUROPEAN PATENT APPLICATION

(11) **EP 0 529 825 A1**
(43) Date of publication of application: **03.03.1993**
(21) Application number: 92307071.8
(22) Date of filing: 03.08.1992
(51) Int. Cl.: F16L 47/00, F16L 41/12

(54) **Universal saddle tee for pipes**

(30) Priority: 07.08.1991 US 741751
(71) Applicant: NPC, INC., Milford New Hampshire 03055 (US)
(72) Inventor: Gundy, William P., Milford, New Hampshire 03055 (US)
(74) Representative: Quest, Barry

(57) **Abstract**

A saddle tee assembly for connecting a lateral pipe (51) to a main pipe (50) includes a saddle tee boot (52), a collar (55) and clamping device (56, 57). The saddle tee boot (52) has a flexible saddle (53) and cylindrical hollow tee section (54). The saddle (53) attaches to the main pipe (50); the hollow tee section (54) receives the lateral pipe (51). The flexible collar (55) overlies the saddle (53) about the periphery of the hollow tee (54). A clamping device (56) circumscribes the main pipe (50) to apply tension along the circumference of the main pipe to the collar (55) thereby to force the collar (55) into the saddle (53) and the saddle (53) against the main pipe (50). A water-activated mastic (107) for improved sealing characteristics may be interposed between the saddle (53) and the main pipe (50).

## Description

### Background of the Invention

### Field of the Invention

This invention generally relates to the interconnection of pipes and more specifically for fittings or apparatus for connecting individual pipes into a pipe system.

### Description of Related Art

Many pipe systems include a main pipe and a plurality of subsidiary pipes that in various applications may be called service, lateral or branch pipes. In the following discussion the phrase "lateral pipe" means any such subsidiary pipe that connects to a main pipe at a tap hole through the main pipe wall. In some systems liquid flows from the main pipe, as a supply pipe or manifold, to lateral pipes; in others, from lateral pipes to the main pipe as a collector or return pipe. Such pipe systems may be installed above or below ground. The pipes may be formed of a wide variety of materials including plastics (polyvinylchloride is typical), thermoplastics, metal and concrete.

It is important to connect such lateral and main pipes with a leakproof connection. In sewer systems, for example, such connections are required to prevent sewage from leaking into the ground and, as importantly, ground water from infiltrating the sewer system. It is also important that the apparatus for making such connections be simple to install in the field, particularly in pipe systems having pipes of large diameter and weight.

This invention particularly relates to a class of pipe fittings called "saddle tee" fittings. Basically a saddle tee fitting has a saddle portion for overlying a portion of a main pipe and a cylindrical extension, called a "tee", that receives the end of a lateral pipe. The saddle is intended to form a seal with the main pipe and the tee, with the lateral pipe. The tee may extend at any angle from an axis of the main pipe, angles of 90°, 60° and 45° being typical.

There are a number of features that should characterize a saddle tee fitting. The fitting must produce a leakproof seal to prevent flow both into and out of the pipe system (i.e., to prevent leaking and ground water filtration). The fitting must be durable and withstand the environment. The fitting must be easy to install, preferably without any requirement for special tooling at an installation site. The fitting should not impede or otherwise alter the flow characteristics in the pipe system. One single saddle tee fitting sized for a given lateral pipe should connect to main pipes of different diameters in order to reduce the inventory of requirements.

United States Letters Patent No. 2,736,335 of Webber for "Tapping and Cutoff Connection to Plastic Fluid Pressure Main" discloses a saddle fitting for plastic pipe. A saddle connects to a main pipe by suitably wetting counterfacing surfaces with an adhesive, typically a plastic solvent, and by clamping the saddle to the pipe until a plastic bond forms.

United States Letters Patent No. 4,606,558 to Davidson for "Plastic Pipe Fitting" discloses a saddle fitting with a perforated saddle and a tee that extends from the saddle. During assembly a solvent coats the interface of the saddle and the main pipe. A clamping tool attaches to bosses at each end of the saddle to clamp the saddle firmly to the main pipe until plastic flows through the perforations and forms rivet-like structures that permanently bond the saddle to the pipe. Then the clamping tool can be removed.

United States Letters Patent No. 3,649,055 to Neilson for "Clamp Fitting With Seal For Plastic Pipe" discloses a fitting with a saddle body that snaps to a main pipe after counterfacing surfaces of the pipe and saddle are coated with a plastic or adhesive. When the saddle snaps onto the pipe, the saddle provides the necessary clamping forces to position the saddle until the solvent or adhesive sets. An O-ring or similar sealing device in a circumferential groove of the saddle provides a seal around a tap hole through the main pipe.

In U. S. Letters Patent No. 4,894,521 to Evans for "Electric Heating Element For Fusing Thermoplastic Materials" a saddle contains an integral heating element. The saddle seals to a pipe of thermoplastic materials when the element heats. This produces a permanent seal between-the saddle and the pipe.

Each of the foregoing references discloses saddle tee fittings in which a permanent bond forms between the saddle and the main pipe. This bond depends upon the ability of the materials in the pipe and saddle to commingle or fuse. Each requires special materials in the form of solvents or heaters. It is not possible to obtain such a joint in sewer systems comprising concrete or ductile iron pipes. Even if it were possible to make such joints in these materials, the requirements for special tools and materials would minimize the desirability of the joints with respect to sewer systems.

U. S. Letters Patent No. 3,188,121 Cude et al for "Cable Sheath Pressure Tap Fitting" discloses a saddle tee structure that enables the formation of a tap for a high pressure line containing electrical conductors or the like. The saddle tee fitting is rubber or plastic while the pipe has an outer sheath of lead or other weather resistant material. The saddle includes an underlying gasket preferably with an adhesive backing for adhering to the pipe. A tape wrap overlies the saddle portion and pipe thereby to hold the saddle against the pipe. In this structure a small gap exists in the tape along the axially extending edges of the saddle that are coextensive with the tee structure. In the Cude et al patent this is a small gap. If this approach is applied to other pipe systems, that gap will approximate the diameter of the lateral pipe gap and can be up to 4" or more. It becomes difficult to maintain a seal across gaps of these proportions. Cude et al also suggest substituting hose clamps for the tape wrap. Such a substitution would not reduce any gap; indeed the gap might increase in length.

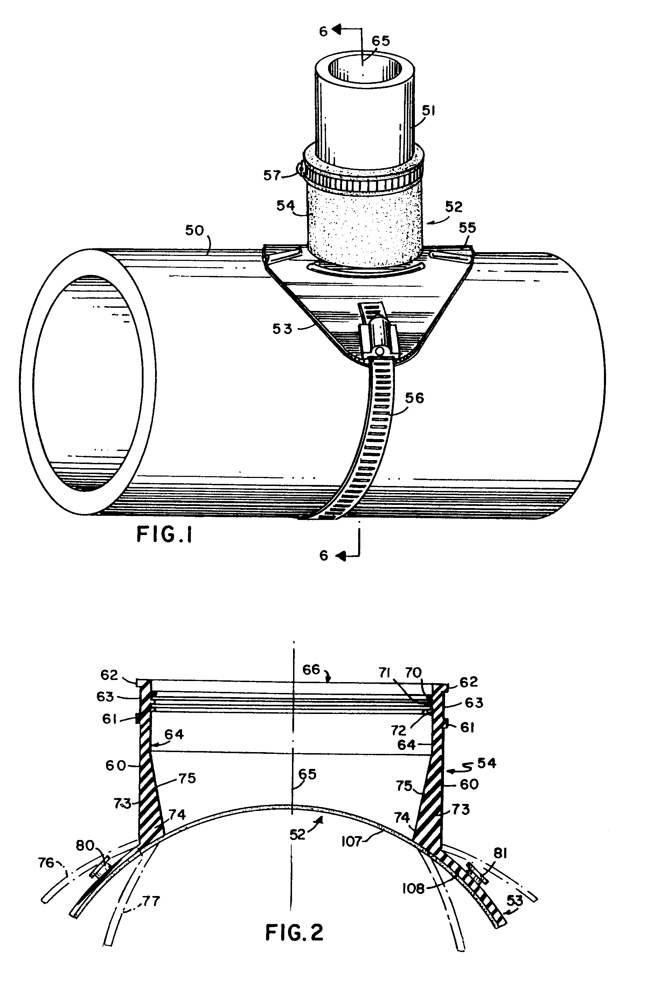

U. S. Letters Patent No. 4,966,397 of MacKinnon for "Flexible Pipe Saddle" discloses a flexible saddle tee fitting that uses spaced hose clamps to affix a saddle to a pipe. As described later with respect to Figures 1 and 2, this saddle tee fitting includes a rectangularly shaped saddle that flexes about an axis that is coincident with the longitudinal main pipe axis, but is relatively rigid in other directions, particularly along the axially extending edges of the saddle parallel to the main pipe axis. Two clamping bands encircle the main pique at the axial ends of the saddle. The spaced clamping bands leave a gap along the axial edge of the saddle. Although this edge contains a stiffening device, it is still difficult to guarantee seal integrity along this entire gap. Each saddle tee is sized by the diameter of a lateral pipe and a saddle tee for a given lateral pipe is adapted to seal against main pipes of different diameters. However, the basic rigidity of the saddle causes the opening of the tee to distort, particularly about an axis through the tee portion. Typically, the saddle is molded with the saddle having a nominal radius of curvature. When the saddle is applied to a pipe having a greater radius, the hollow tee deforms to an oval with a major axis parallel to the main pipe axis. When the saddle is applied to a main pipe (having a smaller radius, the tee distorts to an oval having a major axis perpendicular to the main pipe axis.

Thus, while this type of saddle tee will connect to main pipes of different sizes, the tendency to distort the hollow tee increases the difficulty guaranteeing a seal between the tee to a lateral pipe. Moreover, such deformations produce axial gaps between the end of the lateral pipe and a stop in the hollow tee. When the saddle tee is molded, the end stop has an axial end surface that lies in a plane that abuts the end surface of a lateral pipe. When the saddle is applied to larger or smaller main pipes, the axial end surface distorts into a concave or convex form that produces the axial gaps. These gaps can trap entrained materials that alter or impede flow.

### Summary

Therefore it is an object of this invention to provide a leakproof saddle tee assembly adapted for a wide variety of applications, particularly for connecting lateral and main pipes.

Another object of this invention is to provide a leakproof saddle tee assembly adapted to be sized for a given lateral pipe with a tee that maintains its form when the saddle is connected to main pipes having a variety of sizes.

Still another object of this invention is to provide a leakproof saddle tee assembly that can be installed and removed from a pipe using simple procedures and common tools.

Yet another object of this invention is to provide a leakproof saddle tee assembly with a saddle adapted for connection to main pipes having a variety of diameters that does not alter the flow characteristics in the pipe system.

In accordance with this invention a saddle tee assembly interconnects a first or lateral pipe to a second or main pipe to enable flow through an access or tap formed through a wall of the main pipe. The saddle tee assembly comprises a saddle tee boot with a flexible sealing saddle portion that overlies the surface of the second or main pipe about the periphery of the tap. A hollow tee portion extends from the saddle portion to receive one end of the first or lateral pipe. The saddle around tee portions form a continuous passage therethrough along an axis that is coaxial with an axis through the lateral pipe. A flexible metal collar overlies the saddle portion about the periphery of the hollow tee portion. A main clamp circumscribes the second pipe and connects to the collar at the first and second positions. As the main clamp applies a force in tension to the collar, it displaces the collar toward the main pipe to produce a seal between the flexible saddle portion and the main pipe that extends about the periphery of the tap.

In accordance with another aspect of this invention, a lateral pipe connects to a main pipe at a tap through a wall of the main pipe by locating a saddle tee boot having a flexible saddle portion and a hollow tee portion extending from the saddle portion against the main pipe in alignment with the tap hole. A flexible collar means overlies the base portion about the periphery of the extension. A force in tension applied circumferentially to the collar means forces the collar against the saddle thereby to produce the seal. A final connection is made by clamping an end of the tee portion to the lateral pipe.

### Brief Description of the Drawings

The appended claims particularly point out and distinctly claim the subject matter of this invention. The various objects, advantages and novel features of this invention will be more fully apparent from a reading of the following detailed description in conjunction with the accompanying drawings in which like reference numerals refer to like parts, and in which:
Figure 1 is a perspective view of a saddle tee assembly constructed in accordance with this invention for connecting a lateral pipe to a main pipe;
Figure 2 is a cross section of saddle tee boot constructed in accordance with this invention and used in the assembly shown in Figure 1;
Figure 3 is a plan view of the saddle tee boot shown in Figure 2;
Figure 4 is a plan view of a collar that overlies the boot means of Figures 2 and 3 in accordance with this invention as shown in Figure 1.
Figure 5 is an edge view of the collar shown in Figure 4; and
Figure 6 is a partial cross sectional view taken generally along lines 6-6 of Figure 1.

### Description of Illustrative Embodiment

Fig. 1 discloses a joint between a main pipe 50 and lateral pipe 51 that utilizes a saddle tee boot 52 constructed in accordance with this invention. A flexible saddle 53 on the boot 52 contacts the surface of the main pipe 50 and a hollow tee 54 receives an end of the lateral pipe 51. A collar 55 overlies the saddle 53. A clamping band 56 circumscribes the main pipe 50 and connects to the collar 55 to apply a force in tension that causes the collar 55 to clamp the saddle 53 against the main pipe 50 in a sealing relationship. As the collar 55 overlies the saddle 53 completely about the periphery of the hollow tee 54, the collar 55 produces a continuous seal about a tap hole or access aperture through the main pipe 50 that aligns with the lateral pipe 51. For concrete and other pipes with porous surfaces, a mastic applied between the saddle 53 and the main pipe 50 assures a good seal. A clamping band 57 produces a seal between the hollow tee 54 and the lateral pipe 51.

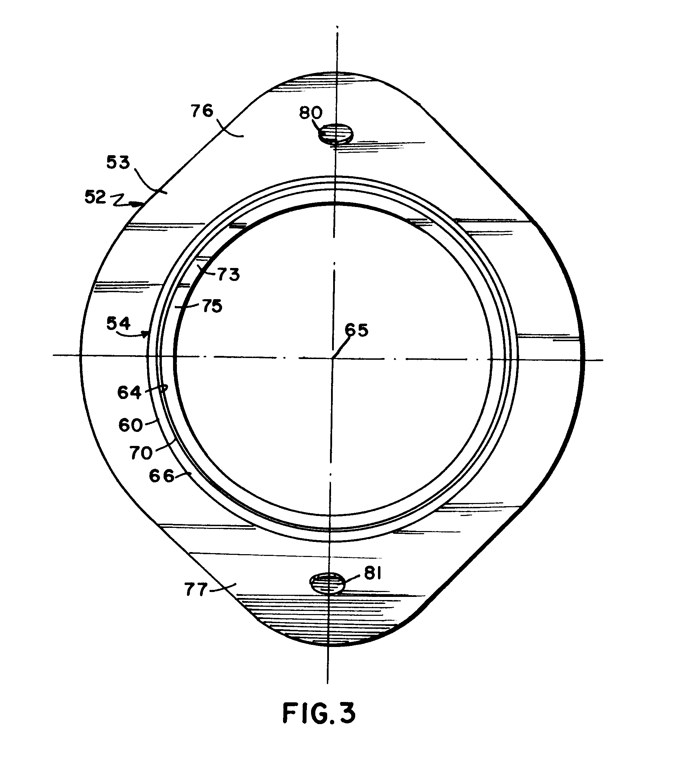

Figs. 2 and 3 disclose the detailed construction of the saddle tee boot 52 including the flexible saddle 53 and the hollow tee 54. The hollow tee 54 has an outer right cylindrical surface 60 with spaced circumferentially extending outer ribs 61 and 62 formed remotely from the saddle 53. The ribs 61 and 62 define a circumferential groove 63 for supporting the clamping band 57 in Fig. 1. The hollow tee 54 has an interior cylindrical surface 64 that is coaxial with an axis 65 that extends between a tap hole in the main pipe and the center of a remote end 66 of the hollow tee 54. The axis 65 is oriented at right angles to the main pipe axis in Figs. 1 through 3; other orientation angles can also be used to permit other lateral pipe orientations. For example, an orientation of 60° produces a product called a wye fitting.

A plurality of circumferentially extending rectangular sealing ribs 70, 71 and 72 on the surface 64 engage the outer surface of the lateral pipe. The sealing ribs 70 through 71 are aligned with the groove 63 so clamping forces bear directly on the ribs 70 through 72 and displace them against the surface of the lateral pipe.

The walls of the hollow tee 54 become progressively thicker from a location approximately midway along the axis 65 to produce a tapered section 73 with an end 74 of maximum thickness at the saddle 53. The inner diameter at the end 74 corresponds to the inner diameter of the lateral pipe. The tapered section 73 thereby defines a conical surface 75 that reduces the passage along the axis 65 from a diameter corresponding to the outer diameter of a lateral pipe at the surface 64 to an inner diameter corresponding to the inner diameter of the pipe. As described later, the tapered section 73 seats a lateral pipe and provides a transition that does not alter the flow characteristics between the main pipe and the lateral pipe. In addition the tapered section 73 facilitates the adaptation of the hollow tee for accommodating variations that can occur in the nominal diameters of a lateral pipe and small angular offsets in the direction of the pipe along the axis 65.

As shown in Fig. 2, the saddle 53, being thin and relatively flexible, can accommodate a wide range of differently sized main pipes by being flexed between positions shown by the dashed lines 76 and 77 in Fig. 2. The flexibility of the saddle 53 and the use of the tapered section 73, particularly the stiffening action provided at the thicker ends 74, also allows these variations to occur without materially altering the cylindrical cross section of the hollow tee 54.

Still referring to Figs. 2 and 3, the saddle 53 contains two integrally molded rivet-like structures 80 and 81 that align along a circumference of the main pipe on either side of the hollow tee 54. As described later, the structures 80 and 81 capture and position the collar 55.

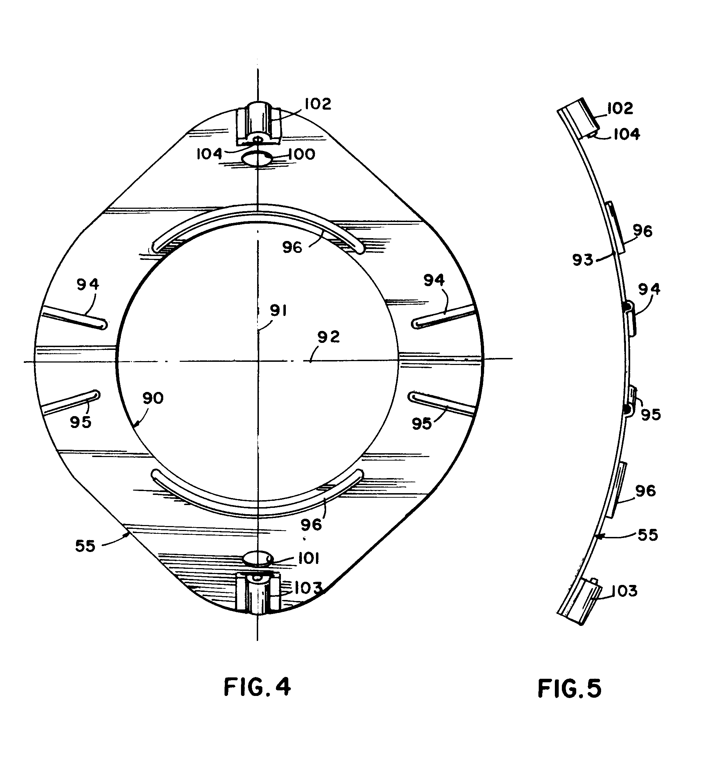

Now referring to Figs. 4 and 5, the collar 55 comprises a thin metal stamping, preferably of stainless steel, with an aperture 90 that conforms to the outer diameter of the hollow tee 54. The stamping operation forms the collar 55 with a radius of curvature as shown in Fig. 5 that corresponds to a radius of curvature molded into the saddle. The collar 55, like the saddle 53, has a generally oval shape along a major axis 91 and a minor axis 92. A plurality of reinforcing ridges in the collar 55 provide strength and assure that an inner surface 93 retains a constant radius as it clamps to a main pipe of any size. More specifically, radially extending reinforcing ridges 94 and 95 are formed on opposite sides of the minor axis 92 along a radii from the intersection of the axes 91 and 92. Two circumferentially extending ridges 96, that are proximate the aperture 90 and centered on the major axis 91, complete this structure.

The collar 55 has two apertures 100 and 101 located outside the ridges 96 and on the axis 91. The apertures 100 and 100 align with the rivet-like structures 80 and 81 shown in Figs. 2 and 3 and capture those structures. Thus, a collar 55 can be assembled to the saddle tee boot 53 at the factory and shipped as a subassembly to the site thereby minimizing on-site assembly requirements.

The collar 55 also supports two clamp tensioning devices 102 and 103 along the axis 91 and at the edges of the collar 55. These are standard mechanisms for accepting a clamping band such as found with conventional hose clamps. Rotation of a captured bolt, such as a bolt 104 associated with the tension device 102, transfers the band through the tension device 102 along the axis 91 either to tighten or loosen the band.

As will now be apparent, the saddle tee assembly constructed in accordance with this invention is sized for a particular diameter lateral pipe. The combination of the flexible saddle 53 and the metal collar 55 allows a saddle to conform to main pipes having a wide variety of diameters without deforming the hollow tee 54. This reduces inventory requirements and makes it easier to obtain a leakproof seal at the lateral pipe. The rivet-like structures 80 and 81 and the apertures 100 and 101 enable factory assembly of the collar 55 and the saddle tee boot 52. Only three pieces are shipped to an installation site, namely: (1) the assembled saddle tee boot

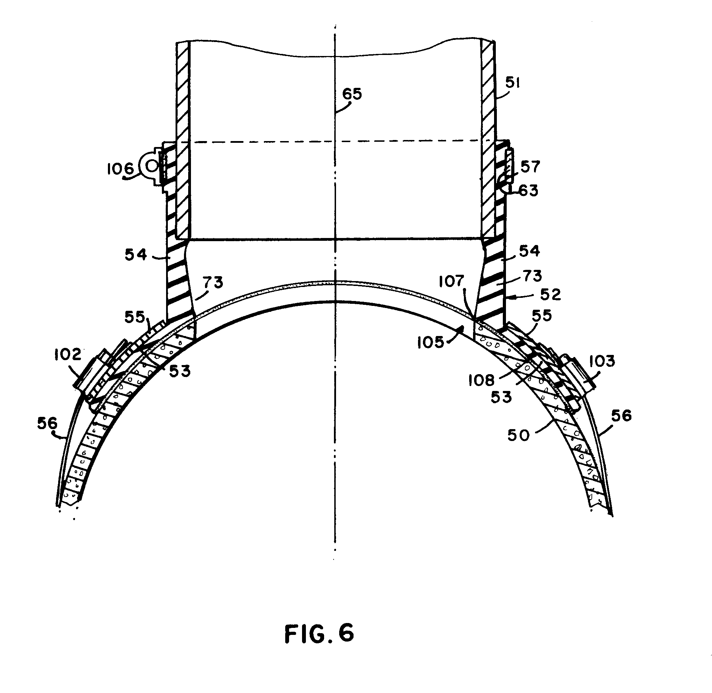

Fig. 6 shows a main pipe 50 with a tap hole 105. In accordance with another aspect of this invention, the tap 105 is nominally at the inner diameter of the lateral pipe 51. As a result, even given an accumulation of tolerances in hole and pipe sizes, it is not possible for a lateral pipe to extend into the main pipe passage and impede flow characteristics. Even nominal pipe size variations will not affect flow because the tapered section 73 tends to conform to the inner diameters of both the main pipe 50 and the lateral pipe 51.

As shown in Fig. 6 as a lateral pipe 51 is installed, it moves along the axis 65 until an end contacts the tapered section 73. Additional displacement of the lateral pipe 51 causes the material in the tapered section 73 to deform around the end of the lateral pipe and define a smooth interconnecting flow passage surface between the end of the lateral pipe 51 and the main pipe 50. Even if the saddle 53 flexes to a different diameter, the resiliency of the tapered section 73 maintains continuous contact with the end of the lateral pipe 51. No axially extending gaps will exist at the end of the lateral pipe 51.

The clamping band 57 located in the groove 63 includes a tensioning nut assembly 106 for tightening the band 57 to force the sealing ribs 70, 71 and 72 against the surface of the lateral pipe 51 thereby to produce a leakproof seal at this position.

When the saddle tee boot 52 and collar 55 are positioned on the pipe 50, the clamping band 56 is threaded into the tensioners 102 and 103 and tightened to produce a circumferentially acting force that applies tension to the collar 55. This causes the collar 55 to bear evenly against the saddle 53 forcing it against the main pipe 50 to produce a seal completely around the tap hole.

When concrete or ductile iron pipes or the like are being interconnected, it may be desirable to form an adhesive seal between the saddle 53 and the main pipe 50. It has been found that a water-activated mastic can be applied to form a coating 107 (Figs. 2 and 6) for an inner surface 108 of the saddle 53 at the factory. At such sites water is always available to wet the coating and activate the mastic before clamping the saddle 53 to a main pipe. More specifically, it is possible to coat the inner surface 108 with an asphalt-based mastic and then coat the mastic with a polyvinyl alcohol, or other water soluble, film to preserve the mastic during storage and shipping. Installers have two options. Under one option, the assembly of the saddle tee 52 and collar 55 is mounted to the main pipe 51 and tightened. Any liquid that tends to penetrate the mechanical seal dissolves the film it contacts and activates the mastic to form an adhesive seal. Alternatively, the installers can wet the entire surface prior to mounting so activates the mastic to form an adhesive seal. Alternatively, the installers can wet the entire surface prior to mounting so all the mastic is activated to seal the entire saddle 53 to the main pipe.

Thus, a saddle tee assembly constructed in accordance with this invention has all of the desirable characteristics of such assemblies. The combination of the sealing force applied by the clamping band 56 and the adhesive seal produced by the mastic combine to produce a leakproof seal that will withstand a wide variety of pressures from inside or outside the pipes. The use of elastomers for manufacturing the saddle tee boot 53 and stainless steel or similar materials for the collar 55 and clamping bands 56 and 106 also produce a saddle tee assembly that is essentially impervious to the elements and the environment encountered in such systems. The structure of the saddle tee boot provides a connection that will not impede or otherwise alter the flow characteristics of the pipe system. One saddle tee boot sized for a given lateral pipe connects to main pipes of different diameters so inventory requirements are reduced. Finally, the saddle tee assembly is installed easily without any requirements for special tools, materials or procedures.

This invention has been disclosed in terms of certain embodiments. It will be apparent that many modifications can be made to the disclosed apparatus without departing from the invention. For example, the disclosed embodiments of this invention depict a saddle tee assembly in which a hollow tee extends at essentially right angles to a main pipe. As described, alternative angular displacements, such as 45° or 60°, are also possible. The saddle tee assembly is shown as having a generally oval shape, other shapes can also be implemented. Specific tensioners and clamping bands are shown; alternative tensioning devices could be substituted. Alternative materials also can be utilized. All these variations and modifications can be made to the specifically disclosed embodiment with the realization of some or all of the advantages of this invention. Therefore, it is the intent of the appended claims to cover all such variations and modifications as come within the true spirit and scope of this invention.

## Claims

1. A saddle tee assembly for interconnecting a first pipe to a second pipe that has an access aperture formed through a wall thereof, said saddle tee assembly comprising:
A. saddle tee boot means for interconnecting the first and second pipes, said boot means having a flexible sealing saddle portion for contacting the surface of the second pipe surrounding the access aperture and having a hollow tee portion extending from said saddle portion for receiving one end of the first pipe at an end of said tee portion remote from said saddle portion, said tee portion being located centrally of said saddle portion whereby said boot means has a continuous passage therethrough,
B. flexible metal collar means for overlying said saddle portion about the periphery of said hollow tee portion, said collar means having first and second positions disposed oppositely of said continuous passage and aligned along a circumference of the second pipe, and
C. main clamping means adapted to circumscribe the second pipe and connect to said collar means at said first and second positions for applying a force that said collar means converts into a force that seals said saddle portion to the second pipe about the periphery of the access aperture.

2. A saddle tee assembly as recited in claim 1 wherein each of said first and second pipes is cylindrical and said first pipe has given outer and inner diameters, said tee portion having a diameter at the end thereof corresponding to the outer diameter.

3. A saddle tee assembly as recited in claim 2 wherein said inner surface of said tee portion at the other end thereof tapers to a diameter at the intersection of said tee extension and said saddle portions that corresponds to the inner diameter of the second pipe.

4. A saddle tee assembly as recited in claim 2 additionally comprising second clamping means for sealing said remote end of said tee portion to the first pipe, said tee portion having a circumferential groove at said remote end for receiving said second clamping means, and wherein said tee extension portion additionally includes circumferentially extending sealing rib means on an inner surface thereof axially aligned with said circumferential groove for sealing said tee portion to the first pipe under the action of said second clamping means.

5. A saddle tee assembly as recited in claim 1 wherein said main clamping means comprises a clamping band for circumscribing the second pipe and means for connecting the ends of said clamping band to said collar means, at least one of said connecting means including means for tensioning said clamping band thereby to generate the sealing force on said saddle portion.

6. A saddle tee assembly as recited in claim 1 wherein each of said boot means and said collar means includes cooperative alignment means for positioning said collar means on said boot means, said alignment means on said boot means being located on said saddle portion.

7. A saddle tee assembly as recited in claim 1 wherein the second pipe lies along an axis, said boot means is formed of an elastomer and said collar means and said clamping means are formed of stainless steel, each of said collar means and said saddle portion of said boot means having an ovoid shape with a major axis that is perpendicular to the axis of the second pipe.

8. A saddle tee assembly as recited in any of claims 1 to 7 additionally comprising a water-activated mastic applied to the surface of said saddle portion that contacts the second pipe.

9. A pipe system including a plurality of interconnected pipes including at least one lateral pipe of a given diameter and a main pipe having at least the given diameter, the main pipe having a tap hole formed in a wall thereof for each lateral pipe, and an assembly for connecting a lateral pipe to the main pipe at a tap hole comprising:
A. a saddle tee boot means for receiving the lateral pipe, said boot means including:
i. a flexible saddle portion for contacting a portion of the surface of the main pipe surrounding the tap hole, and
ii. a hollow tee portion extending from said saddle portion for receiving one end of the lateral pipe at an end of said tee portion remote from said saddle portion, said tee portion being located centrally of said saddle portion whereby said boot means has a continuous passage therethrough that aligns with the tap hole.
B. a flexible collar means overlying said saddle portion about the periphery of said hollow tee portion, each said collar means having first and second positions disposed oppositely of said continuous passage and aligned along a circumference of the main pipe, and
C. a main clamping means being adapted to circumscribe the second pipe and connect to said collar means at said first and second positions for applying a force that said collar means converts into a force that seals said saddle portion to the main pipe about the periphery of the tap hole.

10. A pipe system according to claim 9 including a saddle tee assembly according to any one of claims 1 to 8.

11. A pipe system as recited in claim 9 or 10 additionally comprising a water-activated mastic compound applied to the surface of said saddle portion that contacts the main pipe.
